(19) Europäisches Patentamt

European Patent Office

Office européen des brevets

(11) Numéro de publication : **0 017 566**
**B1**

(12) **FASCICULE DE BREVET EUROPÉEN**

(45) Date de publication du fascicule du brevet :
18.09.85

(51) Int. Cl.⁴ : **C 03 C 3/32, C 03 C 3/23**

(21) Numéro de dépôt : 80400410.9

(22) Date de dépôt : 27.03.80

(54) Verres fluorés, leur préparation et mélanges de fluorures obtenus lors de la préparation.

(30) Priorité : 28.03.79 FR 7907785

(43) Date de publication de la demande :
15.10.80 Bulletin 80/21

(45) Mention de la délivrance du brevet :
18.09.85 Bulletin 85/38

(84) Etats contractants désignés :
AT BE CH DE GB IT LU NL SE

(56) Documents cités :
EP-A- 0 036 373
FR-A- 2 384 724
Mat. Res. Bull. Vol. 13 pages 1039-1046, 1978
Journal of the American Ceramic Society Sept-Oct 1979 pages 537-538 Baldwin and Mackenzie
Chemical Abstracts Vol. 90, 1972 113079 page 307
ANGEWANDTE CHEMIE, vol. 76, no. 8, 21 avril 1964, DR. J. SCHRODER: "Hydrogenfluorid Gläser", pages 344, 345
GLASS TECHNOLOGY, vol. 20, no. 1, février 1979, K.H. SUN: "Fluoride glasses", pages 36-40
PHYSICS AND CHEMISTRY OF GLASSES, vol. 20, no. 4, août 1979, Sheffield, GB, M. MATECKI et al.: "Glas forming systems. New zirconium tetrafluoride glasses with no network modifier elements", abrégé 4001, page 51A

(73) Titulaire : ANVAR Agence Nationale de Valorisation de la Recherche
43, rue Caumartin
F-75436 Paris Cédex 09 (FR)

(72) Inventeur : Miranday, Jean-Pierre
14, Impasse Jean Boin
F-72000 Le Mans (FR)
Inventeur : Jacoboni, Charles
"La Champ d'Orée"
F-72380 Sainte-Jamme (FR)
Inventeur : De Pape, Robert
82, rue de Flore
F-72000 - Le Mans (FR)

(74) Mandataire : Nony, Michel et al
Cabinet Nony 29, rue Cambacérès
F-75008 Paris (FR)

EP 0 017 566 B1

**Description** (pour les Etats contractants : DE, GB, IT, NL)

La présente invention a pour objet de nouveaux verres fluorés, leur préparation et les mélanges de fluorures obtenus lors de la préparation.

On sait que certains composés chimiques, de par leur structure, permettent la formation de verres, seuls ou associés à d'autres constituants ; c'est le cas de la silice et de certains fluorures tels que $BeF_2$, $ZrF_4$ ou $AlF_3$, ou encore de $BaPO_3F$.

C'est ainsi que des verres fluorés, contenant les fluorures mentionnés ci-dessus comme constituants obligatoires, ont été décrits notamment dans les brevets français n° 919.006, 73.15318 (n° de publication 2227236), 73.23903 (n° de publication 2235095), 76.18878 (n° de publication 2354977) et 77.09618 (n° de publication 2384724). Ces verres contiennent le plus souvent trois ou quatre constituants obligatoires.

D'autre part, l'article résumé dans Chemical Abstracts, vol. 78, n° 8, page 225, 47046v (1973) mentionne des verres à base de $BaPO_3F$, pouvant contenir divers fluorures tels que $AlF_3$, $GaF_3$, $InF_3$, $CdF_2$, $ZnF_2$, $PbF_2$, des fluorures alcalins, etc... Ces verres contiennent toujours plus de 15 % en moles de $BaPO_3F$.

Le document résumé dans Chemical Abstract, Vol. 90, page 307, 11307q (Janvier 1979) décrit des verres contenant 5 à 30 % de $P_2O_5$. Il s'agit de verres appartenant à la classe connue des verres aux fluorophosphates. Dans ces verres, les propriétés magnéto-optiques sont apportées par le fluorure de terbium présent à raison de 5 à 45 % en moles.

La demande de brevet européen n° 81.400.409.9 (N° de Publication 0036373) désignant les pays suivants : DE, GB, IT, NL, publiée après la date de dépôt de la présente demande, mais revendiquant une priorité française du 18 mars 1980, décrit à son exemple 16 un verre contenant 25 % de NaF, 5 % de $MgF_2$, 20 % de $BaF_2$, 20 % de $YF_3$, 20 % de $TbF_3$, et 10 % de $GaF_3$. Un tel verre est exclu de la protection demandée ici.

Il convient enfin de noter que la formation de verres à base de fluorures métalliques et d'acide fluorhydrique a été mentionnée dans la littérature (Angewandte Chemie, vol 76, n° 8, 21 avril 1964). Toutefois, il s'est avéré que les produits formés n'étaient pas des verres.

Les nouveaux verres fluorés de la présente invention donnent des combinaisons ternaires et même binaires vitrifiables.

Les verres fluorés de l'invention peuvent être préparés à des températures relativement faibles, sauf dans le cas où ils contiennent des fluorures de terres rares en proportions importantes.

Un autre intérêt des nouveaux verres fluorés de l'invention réside dans la possibilité d'y inclure, en tant que constituant, une proportion importante, pouvant aller jusqu'à 40 % environ, de fluorures d'éléments de transition 3d bivalents. Les verres fluorés de l'invention permettent également l'introduction d'ions alcalins.

Ces propriétés distinguent les verres fluorés de l'invention des verres à base de trifluorure d'aluminium, car l'introduction d'ions alcalins ou l'introduction d'ions bivalents de métaux de transition 3d n'a pas pu être réalisée à partir de formulations à base de trifluorure d'aluminium.

C'est ainsi qu'il n'a pas été possible d'obtenir de verres dans les systèmes $PbF_2$-$AlF_3$, NaF-$PbF_2$ (ou $SrF_2$)-$AlF_3$, et $PbF_2$-$MnF_2$ (ou $CuF_2$)-$AlF_3$.

Ces caractéristiques des verres fluorés de l'invention, liées aux propriétés de transparence dans l'infrarouge propres aux halogénures, leur confèrent des propriétés intéressantes et permettent leur utilisation notamment dans le domaine de l'optique, du magnétisme ou de la magnétooptique. Leur indice de réfraction et leur dispersion d'indice sont différents de ceux des verres fluorés connus. Il est possible de réaliser avec ces verres des matériaux transmettant l'infrarouge jusqu'à 12 microns mais arrêtant éventuellement les radiations visibles. L'introduction dans ces verres de cations, par exemple de chrome, ou de terres rares telles que le néodyme et l'europium, permet de leur conférer des propriétés de luminescence. L'introduction de cadmium permet la réalisation de verres présentant des propriétés d'écrans anti-neutrons. L'introduction de cadmium permet la réalisation de verres présentant des propriétés d'écrans anti-neutrons. L'introduction d'ions alcalins et d'ions de métaux de transition permet de leur conférer des propriétés électriques par conduction ionique grâce par exemple aux ions $Ag^+$, $Na^+$, $Li^+$.

En outre, l'introduction de métaux de transition permet d'une part d'obtenir des verres colorés, car les métaux de transition présentent des bandes d'absorption dans le visible, et permet d'autre part de conférer auxdits verres des propriétés magnéto-optiques car les métaux de transition ont une couche d'électrons 3d incomplète permettant le magnétisme.

Il convient de signaler aussi que les verres fluorés de l'invention se distinguent par leurs indices de réfraction, par leurs dispersions d'indice, et par le fait qu'ils sont transparents même pour des longueurs d'onde infra-rouges relativement grandes.

Les verres fluorés actuellement connus, formés par combinaison de fluorures métalliques, contiennent toujours en proportion importante un constituant privilégié appelé formateur (en langue anglaise « network former ») tel que ceux mentionnés précédemment.

La présente invention a pour objet :

a) de nouveaux verres fluorés, caractérisés par le fait qu'ils contiennent au moins 25 % en moles d'un fluorure ou d'un mélange de fluorures de formule MX(X$_1$)$_2$ dans laquelle :

X et X$_1$ représentent chacun un atome de fluor, et

M représente alors un métal choisi dans le groupe constitué par : le gallium, le fer, le chrome, le vanadium, l'indium et les terres rares,

ou

X représente un atome d'oxygène,

X$_1$ représente un atome de fluor, et

M représente alors un atome de titane,

étant entendu :

— que lesdits verres ne contiennent pas plus de 10 % en moles de ZrF$_4$ et/ou de HfF$_4$,

— qu'ils sont exempts d'acide fluorhydrique comme élément formateur,

— qu'ils ne contiennent pas plus de 10 % en moles de trifluorure d'aluminium,

— et qu'ils sont exempts de fluorophosphates ; à l'exception du verre contenant 25 % de NaF, 5 % de MgF$_2$, 20 % de BaF$_2$, 20 % de YF$_3$, 20 % de TbF$_3$ et 10 % de GaF$_3$ ; et

b) de nouveaux verres fluorés caractérisés par le fait qu'ils contiennent au moins 25 % en moles d'un fluorure ou d'un mélange de fluorures de formule MX(X$_1$)$_2$ dans laquelle :

X et X$_1$ représentent chacun un atome de fluor, et

M représente alors un métal choisi dans le groupe constitué par : le gallium, le fer, le chrome, le vanadium, l'indium et les terres rares, à l'exception du terbium,

ou

X représente un atome d'oxygène, et X$_1$ un atome de fluor, et

M représente alors un atome de titane,

étant entendu :

— que lesdits verres ne contiennent pas plus de 10 % en moles de ZrF$_4$ et/ou de HfF$_4$,

— qu'ils sont exempts d'acide fluorhydrique comme élément formateur,

— qu'ils ne contiennent pas plus de 10 % en moles de trifluorure d'aluminium,

— et qu'ils ne contiennent pas de fluorophosphates alcalino-terreux ou n'en contiennent pas plus de 5 % en moles.

Les différents types de verres définis précédemment peuvent contenir en outre au moins un fluorure de formule M$_I$F, MI étant choisi dans le groupe constitué par les métaux alcalins et l'argent. Ces verres contiennent généralement jusqu'à 50 % en moles du fluorure ou du mélange de fluorures M$_I$F. Comme indiqué ci-dessus, l'introduction du fluorure M$_I$F permet de conférer aux verres de la présente invention des propriétés électriques. D'autre part, l'introduction d'un fluorure monovalent ou d'un mélange de fluorures monovlents permet d'abaisser la température de fusion des mélanges et favorise la stabilité du verre car elle augmente le désordre des ions à l'état liquide. En outre, l'introduction du fluorure monovalent favorise la formation des verres contenant les fluorures M$_{II}$F$_2$ mentionnés ci-dessus, notamment ceux qui sont exempts de plomb.

Lorsque les verres de l'invention contiennent des fluorures de terres rares, ces fluorures sont par exemple ceux des terres rares suivantes : néodyme, gadolinium, europium, holmium, praséodyme, erbium, etc...

Les verres fluorés de la présente invention peuvent encore contenir, en outre, un ou plusieurs adjuvants tels que :

— le trifluorure de bismuth, de préférence jusqu'à 22 % en moles ;

— un ou plusieurs halogénures (autres que les fluorures) et notamment des chlorures, en particulier ceux des métaux cités précédemment, et notamment ceux des métaux M$_{II}$ et M$_I$, tels que par exemple PbCl$_2$, jusqu'à 10 % en moles ;

— des fluorophosphates alcalino-terreux, et en particulier BaPO$_3$F, en quantité ne dépassant pas 5 % en moles ; bien entendu les verres de l'invention peuvent être exempts de fluorophosphates, notamment alcalino-terreux, et en particulier exempts de BaPO$_3$F ;

— ZrF$_4$ ou HfF$_4$, dans les proportions mentionnées, c'est-à-dire jusqu'à 10 % en moles ; bien entendu, les verres de l'invention peuvent être exempts de ces constituants ou de l'un quelconque d'entre eux.

**Description** (pour les Etats contractants : AT, BE, CH, LU, SE)

La présente invention a pour objet de nouveaux verres fluorés, leur préparation et les mélanges de fluorures obtenus lors de la préparation.

On sait que certains composés chimiques, de par leur structure, permettent la formation de verres, seuls ou associés à d'autres constituants ; c'est lecas de la silice et de certains fluorures tels que BeF$_2$, ZrF$_4$ ou AlF$_3$, ou encore de BaPO$_3$F.

C'est ainsi que des verres fluorés, contenant les fluorures mentionnés ci-dessus comme constituants obligatoires, ont été décrits notamment dans les brevets français n° 919.006, 73.15318 (n° de publication 2227236), 73.23903 (n° de publication 2235095), 76.18878 (n° de publication 2354977) et 77.09618 (n° de publication 2384724). Ces verres contiennent le plus souvent trois ou quatre constituants obligatoires.

D'autre part, l'article résumé dans Chemical Abstracts, vol. 78, n° 8, page 225, 47046v (1973) mentionne des verres à base de $BaPO_3F$, pouvant contenir divers fluorures tels que $AlF_3$, $GaF_3$, $InF_3$, $CdF_2$, $ZnF_2$, $PbF_2$, des fluorures alcalins, etc... Ces verres contiennent toujours plus de 15 % en moles de $BaPO_3F$.

Le document résumé dans Chemical Abstract, Vol. 90, page 307, 11307q (Janvier 1979) décrit des verres contenant 5 à 30 % de $P_2O_5$. Il s'agit de verres appartenant à la classe connue des verres aux fluorophosphates. Dans ces verres, les propriétés magnéto-optiques sont apportées par le fluorure de terbium présent à raison de 5 à 45 % en moles.

Il convient enfin de noter que la formation de verres à base de fluorures métalliques et d'acide fluorhydrique a été mentionnée dans la littérature (Angewandte Chemie, vol 76, n° 8, 21 avril 1964). Toutefois, il s'est avéré que les produits formés n'étaient pas des verres. Les nouveaux verres fluorés de la présente invention donnent des combinaisons ternaires et même binaires vitrifiables.

Les verres fluorés de l'invention peuvent être préparés à des températures relativement faibles, sauf dans le cas où ils contiennent des fluorures de terres rares en proportions importantes.

Un autre intérêt des nouveaux verres fluorés de l'invention réside dans la possibilité d'y inclure, en tant que constituant, une proportion importante, pouvant aller jusqu'à 40 % environ, de fluorures d'éléments de transition 3d bivalents. Les verres fluorés de l'invention permettent également l'introduction d'ions alcalins.

Ces propriétés distinguent les verres fluorés de l'invention des verres à base de trifluorure d'aluminium, car l'introduction d'ions alcalins ou l'introduction d'ions bivalents de métaux de transition 3d n'a pas pu être réalisée à partir de formulations à base de trifluorure d'aluminium.

C'est ainsi qu'il n'a pas été possible d'obtenir de verres dans les systèmes $PbF_2$-$AlF_3$, $NaF$-$PbF_2$ (ou $SrF_2$)-$AlF_3$, et $PbF_2$-$MnF_2$ (ou $CuF_2$)-$AlF_3$.

Ces caractéristiques des verres fluorés de l'invention, liées aux propriétés de transparence dans l'infrarouge propres aux halogénures, leur confèrent des propriétés intéressantes et permettant leur utilisation notamment dans le domaine de l'optique, du magnétisme ou de la magnétooptique. Leur indice de réfraction et leur dispersion d'indice sont différents de ceux des verres fluorés connus. Il est possible de réaliser avec ces verres des matériaux transmettant l'infrarouge jusqu'à 12 microns mais arrêtant éventuellement les radiations visibles. L'introduction dans ces verres de cations, par exemple de chrome, ou de terres rares telles que le néodyme et l'europium, permet de leur conférer des propriétés de luminescence. L'introduction de cadmium permet la réalisation de verres présentant des propriétés d'écrans anti-neutrons. L'introduction d'ions alcalins et d'ions de métaux de transition permet de leur conférer des propriétés électriques par conduction ionique grâce par exemple aux ions $Ag^+$, $Na^+$, $Li^+$.

En outre, l'introduction de métaux de transition permet d'une part d'obtenir des verres colorés, car les métaux de transition présentent des bandes d'absorption dans le visible, et permet d'autre part de conférer auxdits verres des propriétés magnéto-optiques car les métaux de transition ont une couche d'électrons 3d incomplète permettant le magnétisme.

Il convient de signaler aussi que les verres fluorés de l'invention se distinguent par leurs indices de réfraction, par leurs dispersions d'indice, et par le fait qu'ils sont transparents même pour des longueurs d'onde infra-rouges relativement grandes.

Les verres fluorés actuellement connus, formés par combinaison de fluorures métalliques, contiennent toujours en proportion importante un constituant privilégié appelé formateur (en langue anglaise « network former ») tel que ceux mentionnés précédemment.

La présente invention a pour objet :

a) de nouveaux verres fluorés, caractérisés par le fait qu'ils contiennent au moins 25 % en moles d'un fluorure ou d'un mélange de fluorures de formule $MX(X_1)_2$ dans laquelle :

X et $X_1$ représentent chacun un atome de fluor, et

M représente alors un métal choisi dans le groupe constitué par : le gallium, le fer, le chrome, le vanadium, l'indium et les terres rares,

ou

X représente un atome d'oxygène,

$X_1$ représente un atome de fluor, et

M représente alors un atome de titane,

étant entendu :

— que lesdits verres ne contiennent pas plus de 10 % en moles de $ZrF_4$ et/ou de $HfF_4$,

— qu'ils sont exempts d'acide fluorhydrique comme élément formateur,

— et qu'ils sont exempts de fluorophosphates ; et

b) de nouveaux verres fluorés caractérisés par le fait qu'ils contiennent au moins 25 % en moles d'un fluorure ou d'un mélange de fluorures de formule $MX(X_1)_2$ dans laquelle :

X et $X_1$ représentent chacun un atome de fluor, et

M représente alors un métal choisi dans le groupe constitué par : le gallium, le fer, le chrome, le vanadium, l'indium et les terres rares, à l'exception du terbium,

ou

X représente un atome d'oxygène,

$X_1$ représente un atome de fluor, et

M représente alors un atome de titane,

étant entendu :

— que lesdits verres ne contiennent pas plus de 10 % en moles de $ZrF_4$ et/ou de $HfF_4$,

— qu'ils sont exempts d'acide fluorhydrique comme élément formateur,

— et qu'ils ne contiennent pas de fluorophosphates alcalino-terreux ou n'en contiennent pas plus de 5 % en moles.

Les différents types de verres définis précédemment peuvent contenir en outre au moins un fluorure de formule $M_lF$, $M_l$ étant choisi dans le groupe constitué par les métaux alcalins et l'argent. Ces verres contiennent généralement jusqu'à 50 % en moles du fluorure ou du mélange de fluorures $M_lF$. Comme indiqué ci-dessus, l'introduction du fluorure $M_lF$ permet de conférer aux verres de la présente invention des propriétés électriques. D'autre part, l'introduction d'un fluorure monovalent ou d'un mélange de fluorures monovalents permet d'abaisser la température de fusion des mélanges et favorise la stabilité du verre car elle augmente le désordre des ions à l'état liquide. En outre, l'introduction du fluorure monovalent favorise la formation des verres contenant les fluorures $M_{ll}F_2$ mentionnés ci-dessus, notamment ceux qui sont exempts de plomb.

Lorsque les verres de l'invention contiennent des fluorures de terres-rares, ces fluorures sont par exemple ceux des terres rares suivantes : néodyme, gadolinium, europium, holmium, praséodyme, erbium, etc...

Les verres fluorés de la présente invention peuvent encore contenir, en outre, un ou plusieurs adjuvants tels que :

— le trifluorure de bismuth, de préférence jusqu'à 22 % en moles ;

— un ou plusieurs halogénures (autres que les fluorures) et notamment des chlorures, en particulier ceux des métaux cités précédemment, et notamment ceux des métaux $M_{ll}$ et $M_l$, tels que par exemple $PbCl_2$, jusqu'à 10 % en moles ;

— des fluorophosphates alcalino-terreux, et en particulier $BaPO_3F$, en quantité ne dépassant pas 5 % en moles ; bien entendu les verres de l'invention peuvent être exempts de fluorophosphates, notamment alcalino-terreux, et en particulier exempts de $BaPO_3F$ ;

— $ZrF_4$ ou $HfF_4$, dans les proportions mentionnées, c'est-à-dire jusqu'à 10 % en moles ; bien entendu, les verres de l'invention peuvent être exempts de ces constituants ou de l'un quelconque d'entre eux.

**Description** (pour les Etats contractants : AT, BE, CH, DE, GB, IT, LU, NL, SE)

— $AlF_3$, jusqu'à 10 % en moles ; bien entendu, les verres de l'invention peuvent être exempts de l'$AlF_3$.

Les verres de l'invention peuvent aussi contenir à titre d'additifs des oxydes, notamment des oxydes métalliques.

En outre, les verres fluorés de l'invention sont de préférence exempts de fluorure de beryllium et de fluorure de magnésium.

Parmi les verres fluorés de l'invention, on peut citer en particulier les verres suivants, qui sont caractérisés par le fait qu'ils contiennent :

— de 25 à 30 % en moles de fluorure ou de mélange de fluorures $MX(X_1)_2$, le reste étant constitué par un fluorure ou un mélange de fluorures $M_{ll}F_2$ ;

— de 48 à 55 % en moles de fluorure ou de mélange de fluorures $MX(X_1)_2$, le reste étant constitué par un fluorure ou un mélange de fluorures $M_{ll}F_2$ ;

— de 25 à 50 % en moles de fluorure ou de mélange de fluorures $MX(X_1)_2$, de 20 à 60 % en moles, de fluorure ou de mélange de fluorures $M_{ll}F_2$, le reste étant constitué par un fluorure ou un mélange de fluorures $MtF_2$, ce dernier étant présent à raison de moins de 40 % en moles ;

— de 37 à 50 % en moles de fluorure ou de mélange de fluorures $MX(X_1)_2$, de 10 à 55 % en moles, fluorure ou de mélange de fluorures $M_{ll}F_2$, le reste étant constitué par un fluorure ou un mélange de fluorures $M_lF$, ce dernier étant présent à raison de moins de 50 % en moles ;

— de 25 à 50 % en moles de fluorure ou de mélange de fluorures $MX(X_1)_2$, de 10 à 60 % de fluorure ou de mélange de fluorures $M_{ll}F_2$, jusqu'à 50 % en moles, de fluorure ou de mélange de fluorures $M_lF$, le reste étant constitué par un fluorure ou un mélange de fluorures $MtF_2$ présent à raison de 40 % en moles, au maximum.

Parmi les verres de l'invention, on citera notamment ceux pour lesquels M représente le fer, le chrome, le vanadium et les terres rares.

Parmi les verres de l'invention, on citera aussi ceux contenant jusqu'à 12 % en moles de trifluorures de terres rares, étant entendu que, dans ce cas, lesdits verres contiennent nécessairement d'autres fluorures $MX (X_1)_2$, tels que définis ci-dessus (mais pour lesquels M n'est pas une terre rare), pour arriver au moins à la proportion de 25 % en moles, au total.

Parmi les verres de l'invention, on citera encore ceux qui sont constitués uniquement des divers fluorures (ou oxyfluorures) sus-mentionnés, éventuellement combinés à d'autres halogénures métalliques.

On citera également les verres contenant au moins un fluorure $MtF_2$ pour lesquels Mt est choisi dans le groupe constitué par le cobalt, le cuivre, le manganèse, le fer, le nickel et le zinc.

On peut également mentionner les verres fluorés de l'invention à base des fluorures suivants :

— M = Fe ;    Mt = Cu ;    $M_{II}$ = Pb ;
— M = Cr ;    Mt = Mn ;    $M_{II}$ = Pb.

Les propriétés de ces derniers verres sont mentionnés ci-après.

Les verres de la présente invention sont aisément taillables et résistent généralement bien à l'humidité ambiante. Ils peuvent être chauffés sans dommage à l'air ou sous atmosphère d'acide fluorhydrique de 200 °C à 400 °C selon les températures de transition vitreuse. Ils peuvent être employés, de façon générale, dans les installations, conteneurs, etc., susceptibles d'être en contact avec des produits tels que le fluor ou l'acide fluorhydrique.

Les échantillons sont transparents de 250 nm à 8 000 nm et même jusqu'à 12 000 nm pour ceux qui ne contiennent pas de fluorures alcalins. Ils présentent évidemment les bandes d'absorption caractéristiques des éléments de transition constituants du verre étudié qui peuvent les rendre éventuellement opaques pour certaines longueurs d'ondes. L'incorporation de néodyme et/ou d'europium par exemple permet de leur conférer d'importantes propriétés de luminescence.

Les propriétés optiques des verres de l'invention permettent de les utiliser notamment dans les appareils d'optique, en particulier dans le domaine de l'infra-rouge, et de les utiliser également dans la fabrication de fibres optiques.

Certains ions, notamment des ions $Fe^{3\oplus}$, $Co^{2\oplus}$, $Ni^{2\oplus}$, $Cr^{3\oplus}$, $Cu^{2\oplus}$, $Fe^{2\oplus}$ et $Mn^{2\oplus}$, leurs confèrent, lorsqu'ils sont présents, des propriétés magnétiques. Ces verres présentent un ordre magnétique à basse température qui associé à leur isotropie et à leur parfaite transparence autorise des propriétés magnétooptiques telles que celles signalées dans certains fluorures de fer cristallisés.

Enfin, certains de ces verres, et en particulier ceux à base de Pb−Cu−Fe ou de Pb−Mn−Cr ont de bonnes propriétés d'adhérence avec les métaux et peuvent ainsi servir de revêtement protecteur d'objets métalliques.

Les verres de l'invention peuvent être préparés en mélangeant les constituants puis en faisant fondre le mélange des fluorures sous atmosphère neutre et sèche. Le verre liquide obtenu peut être ensuite traité selon les méthodes usuelles pour lui donner la forme désirée. Il est par exemple coulé dans un moule ou étalé avec un rouleau cylindrique ou laminé entre deux rouleaux cylindriques tournant à vitesse élevée, ou encore filé.

La préparation des verres se fait généralement dans une boîte à gants. Les mélanges de fluorures sont chauffés en creuset de platine, de préférence à température supérieure d'environ 100 à 200 °C au point de fusion du mélange. Ces points de fusion, qui varient avec la composition desdits mélanges, sont généralement compris entre 480 et 800 °C environ (sauf en cas de présence de fluorures de terres rares en quantités importantes), et sont souvent inférieurs à 650 °C.

Le verre liquide obtenu peut être coulé par exemple dans un moule de laiton préchauffé à température de 150 à 300 °C, environ, ou étalé avec un rouleau cylindrique sur une surface polie.

Les verres de la présente invention peuvent également être obtenus après mélange des constituants, par fusion par induction, aux températures indiquées ci-dessus. On opère ensuite comme ci-dessus, notamment par passage du liquide entre deux rouleaux cylindriques tournant à vitesse élevée, par exemple à 3 000 t/mn environ (technique dite de l'hypertrempe).

Le procédé de fabrication des verres fluorés fait également partie de l'invention.

L'invention a également pour objet les mélanges de fluorures ayant les compositions indiquées ci-dessus, obtenus à titre de produits intermédiaires dans ce procédé de préparation.

Les exemples suivants illustrent l'invention sans toutefois la limiter.

Exemple 1

On mélange les fluorures suivants, sous forme de poudres dans les proportions indiquées :

| Constituants | % en moles |
|---|---|
| $GaF_3$ | 25 |
| $PbF_2$ | 50 |
| $MnF_2$ | 25 |

On chauffe le mélange dans une boîte à gants en atmosphère sèche à une température de 600 à 650 °C. Après quelques minutes à cette température, le verre fondu obtenu est coulé dans un moule en laiton préchauffé à 200 °C et étalé avec un rouleau en laiton. Un échantillon est ensuite taillé sous la forme d'un parallélépipède de dimensions suivantes : 60 × 10 × 1 mm.

Le verre obtenu est incolore.
Son indice de réfraction est : $n_D$ = 1,638
Sa température de fusion est de 515 °C
Sa température de cristallisation est de 292 °C.

En opérant de façon analogue, on a préparé les verres des exemples suivants.

Exemple 2

| Constituants | % en moles |
|---|---|
| FeF$_3$ | 45 |
| PbF$_2$ | 25 |
| KF | 30 |

Couleur : jaune brun

$n_D = 1,557$

| | |
|---|---|
| Température de transition vitreuse (Tg) | = 265 °C |
| Température de cristallisation (Tc) | = 312 °C |
| Température de fusion (Tf) | = 570 °C |

Exemple 3

| Constituants | % en moles |
|---|---|
| CrF$_3$ | 25 |
| PbF$_2$ | 50 |
| MnF$_2$ | 25 |

Couleur : vert

$n_D = 1,663$

Tg = 261

Tc = 310

Tf = 570.

De préférence, on a préparé les verres suivants, dont la composition et les propriétés sont résumées dans le Tableau I. Dans ce tableau, la désignation de chaque constituant est précédée d'un nombre qui représente la proportion de constituant dans le verre (% en moles).

(Voir tableau I pages suivantes)

Tableau I

| EX. | Composition | | | Tg °C | Tc °C | Tf °C | Couleur |
|---|---|---|---|---|---|---|---|
| 4 | 70 $PbF_2$ | 30 $GaF_3$ | | – | 270 | 556 | incolore |
| 5 | 50 $PbF_2$ | 50 $FeF_3$ | | 270 | 310 | 537 | jaune brun |
| 6 | 30 NaF | 25 $PbF_2$ | 45 $GaF_3$ | 261 | 286 | 560 | incolore |
| 7 | 30 NaF | 25 $PbF_2$ | 45 $FeF_3$ | 235 | 282 | 515 | brun rouge |
| 8 | 30 NaF | 25 $PbF_2$ | 45 $CrF_3$ | – | 382 | 595 | vert |
| 9 | 30 NaF | 25 $PbF_2$ | 45$VF_3$ | 250 | 297 | 576 | vert clair |
| 10 | 30 LiF | 25 $PbF_2$ | 45 $GaF_3$ | 225 | 282 | 507 | incolore |
| 11 | 30 KF | 25 $PbF_2$ | 45 $GaF_3$ | 295 | 329 | 547 | incolore |
| 12 | 30 AgF | 25 $PbF_2$ | 45 $GaF_3$ | 271 | 314 | 524 | incolore |
| 13 | 30 AgF | 25 $PbF_2$ | 45 $FeF_3$ | 227 | 272 | 515 | jaune brun |
| 14 | 30 NaF | 25 $CaF_2$ | 45 $GaF_3$ | 312 | 373 | 600 | incolore |
| 15 | 30 NaF | 25 $CaF_2$ | 45 $FeF_3$ | 298 | 355 | 612 | brun |
| 16 | 30 NaF | 25 $CaF_2$ | 45 $CrF_3$ | – | 485 | 770 | vert |
| 17 | 30 NaF | 25 $SrF_2$ | 45 $CrF_3$ | – | 429 | 760 | vert |
| 18 | 30 NaF | 25 $SrF_2$ | 45 $VF_3$ | 311 | 365 | 650 | vert clair |
| 19 | 33 $PbF_2$ | 33 $MnF_2$ | 34 $FeF_3$ | 263 | 311 | 525 | jaune brun |
| 20 | 33 $PbF_2$ | 33 $CuF_2$ | 34 $FeF_3$ | 239 | 293 | 495 | vert sombre |

Tableau I (suite 2)

| EX. | Composition | | | | Tg °C | Tc °C | Tf °C | Couleur |
|---|---|---|---|---|---|---|---|---|
| 21 | 33 $PbF_2$ | 33 $CuF_2$ | 34 $GaF_3$ | | 272 | 333 | 561 | vert |
| 22 | 47 $PbF_2$ | 13 $CoF_2$ | 40 $FeF_3$ | | 269 | 309 | 560 | brun |
| 23 | 47 $PbF_2$ | 13 $CoF_2$ | 40 $GaF_3$ | | – | 320 | 595 | violet |
| 24 | 48 $PbF_2$ | 10 $NiF_2$ | 40 $GaF_3$ | | 288 | 308 | 607 | jaune clair |
| 25 | 43 $PbF_2$ | 17 $ZnF_2$ | 40 $GaF_3$ | | 261 | 335 | 560 | incolore |
| 26 | 33 $BaF_2$ | 33 $MnF_2$ | 34 $FeF_3$ | | 300 | 374 | 714 | brun-jaune |
| 27 | 43 $CaF_2$ | 17 $CuF_2$ | 40 $GaF_3$ | | 344 | 400 | 736 | vert |
| 28 | 45 $CaF_2$ | 15 $CoF_2$ | 45 $GaF_3$ | | – | 397 | 770 | violet |
| 29 | 50 $PbF_2$ | 25 $MnF_2$ | 25 $VF_3$ | | 250 | 291 | 523 | vert clair |
| 30 | 50 $PbF_2$ | 50 $ZnF_2$ | 25 $VF_3$ | | – | 288 | 535 | vert clair |
| 31 | 50 $PbF_2$ | 25 $MnF_2$ | 25 $GaF_3$ | | 222 | 283 | 552 | incolore |
| 32 | 40 $PbF_2$ | 25 $MnF_2$ | 25 $FeF_3$ | 10 $PbCl_2$ | 240 | 287 | 500 | jaune-brun |
| 33 | 50 $PbF_2$ | 25 $MnF_2$ | 25 $TiOF_2$ | | 238 | 291 | 525 | brun |
| 34 | 22 $PbF_2$ | 33 $MnF_2$ | 33 $FeF_3$ | 11 $BiF_3$ | – | 308 | 470 | jaune |
| 35 | 36 $PbF_2$ | 24 $MnF_2$ | 10 $NdF_3$ | 30 $GaF_3$ | – | 310 | 535 | rose pâle |

Tableau I (suite 3)

| EX. | Composition | | | Tg °C | Tc °C | Tf °C | Couleur |
|---|---|---|---|---|---|---|---|
| 36 | 20 BaF$_2$ | 35 MnF$_2$ | 45 FeF$_3$ | – | 392 | 710 | jaune-brun |
| 37 | 30 NaF | 25 CdF$_2$ | 45 VF$_3$ | – | – | – | vert |
| 38 | 50 CdF$_2$ | 50 FeF$_3$ | | – | 297 | 665 | jaune-brun |
| 39 | 50 CaF$_2$ | 50 FeF$_3$ | | – | – | 790 | jaune-brun |
| 40 | 46 PbF$_2$ | 22 ZnF$_2$ | 32 InF$_3$ | 220 | 250 | 485 | incolore |
| 41 | 20 BaF$_2$ | 35 MnF$_3$ | 45 HoF$_3$ | – | 395 | 740 | beige clair |

## 0 017 566

**Revendications** (pour les Etats contractants : DE, GB, IT, NL)

1. Verres fluorés caractérisés par le fait qu'ils contiennent au moins 25 % en moles d'un fluorure ou d'un mélange de fluorures de formule $MX(X_1)_2$ dans laquelle :

X et $X_1$ représentent chacun un atome de fluor, et

M représente alors un métal choisi dans le groupe constitué par : le gallium, le fer, le chrome, le vanadium, l'indium et les terres rares,

ou

X représente un atome d'oxygène,

$X_1$ représente un atome de fluor, et

M représente alors un atome de titane,

étant entendu :

— que lesdits verres ne contiennent pas plus de 10 % en moles de $ZrF_4$ et/ou de $HfF_4$,

— qu'ils sont exempts d'acide fluorhydrique comme éléments formateur,

— qu'ils ne contiennent pas plus de 10 % en moles de trifluorure d'aluminium,

— et qu'ils sont exempts de fluorophosphates ;

à l'exception du verre contenant 25 % de NaF, 5 % de $MgF_2$, 20 % de $BaF_2$, 20 % de $YF_3$, 20 % de $TbF_3$ et 10 % de $GaF_3$.

2. Verres fluorés, caractérisés par le fait qu'ils contiennent au moins 25 % en moles d'un fluorure ou d'un mélange de fluorures de formule $MX(X_1)_2$ dans laquelle :

X et $X_1$ représentent chacun un atome de fluor, et

M représente alors un métal choisi dans le groupe constitué par : le gallium, le fer, le chrome, le vanadium, l'indium et les terres rares, à l'exception du terbium,

ou

X représente un atome d'oxygène, et $X_1$ un atome de fluor, et

M représente alors un atome de titane,

étant entendu :

— que lesdits verres ne contiennent pas plus de 10 % en moles de $ZrF_4$ et/ou $HfF_4$,

— qu'ils sont exempts d'acide fluorhydrique comme élément formateur,

— qu'ils ne contiennent pas plus de 10 % en moles de trifluorure d'aluminium,

— et qu'ils ne contiennent pas de fluorophosphates alcalino-terreux, ou n'en contiennent pas plus de 5 % de moles.

3. Verres fluorés selon la revendication 1 ou 2, caractérisé par le fait qu'ils comprennent au moins un fluorure d'une terre rare choisie parmi le néodyme, le gadolinium, l'europium, l'holmium, le praséodyme, et l'erbium.

4. Verres fluorés selon l'une quelconque des revendications précédentes, caractérisés par le fait qu'ils contiennent en outre, dans une proportion pouvant aller jusqu'à 75 % en moles, au moins un fluorure de formule $M_{II}F_2$, $M_{II}$ étant un métal divalent choisi dans le groupe constitué par le plomb, le baryum, le calcium, le cadmium et le strontium.

5. Verres fluorés selon l'une quelconque des revendications précédentes, caractérisés par le fait qu'ils contiennent en outre au moins un fluorure de formule $MtF_2$, Mt étant un métal de transition 3d.

6. Verres fluorés selon la revendication 5, caractérisés par le fait que Mt est choisi dans le groupe constitué par le cobalt, le cuivre, le manganèse, le fer, le nickel, le chrome et le zinc.

7. Verres fluorés selon l'une quelconque des revendications 5 et 6, caractérisés par le fait qu'ils contiennent jusqu'à 40 % en moles de fluorure ou de mélange de fluorures $MtF_2$.

8. Verres fluorés selon l'une quelconque des revendications 4 à 7, caractérisés poar le fait qu'ils contiennent en outre au moins un fluorure de formule $M_IF$, $M_I$ étant choisi dans le groupe constitué par les métaux alcalins et l'argent.

9. Verres fluorés selon la revendication 8, caractérisés par le fait qu'ils contiennent jusqu'à 50 % en moles de fluorures ou de mélange de fluorures $M_IF$.

10. Verres fluorés selon l'une quelconque des revendications précédentes, caractérisés par le fait qu'ils contiennent en outre un ou plusieurs halogénures autres que des fluorures.

11. Verres fluorés selon la revendication 10, caractérisés par le fait que lesdits halogénures sont des halogénures des métaux $M_{II}$ et $M_I$, $M_{II}$ et $M_I$ étant définis comme précédemment.

12. Verres fluorés selon l'une quelconque des revendications 10 et 11, caractérisés par le fait qu'ils contiennent jusqu'à 10 % en moles dudit halogénure autre que les fluorures.

13. Verres fluorés selon l'une quelconque des revendications 10 à 12, caractérisés par le fait que ledit halogénure est $PbCl_2$.

14. Verres fluorés selon l'une quelconque des revendications précédentes, caractérisés par le fait qu'ils sont exempts de trifluorure d'aluminium.

15. Verres fluorés selon l'une quelconque des revendications précédentes, caractérisés par le fait qu'ils sont exempts de fluorure de béryllium et de fluorure de magnésium.

16. Verres fluorés selon l'une quelconque des revendications 2 à 15, caractérisés par le fait qu'ils sont exempts de fluorophosphate.

17. Verres fluorés selon l'une quelconque des revendications 4 et 14 à 16, caractérisés par le fait

11

qu'ils contiennent de 25 à 30 % en moles de fluorure ou de mélange de fluorures $MX(X_1)_2$, le reste étant constitué par un fluorure ou un mélange de fluorures $M_{II}F_2$.

18. Verres fluorés selon l'une quelconque des revendications 4 et 14 à 16, caractérisés par le fait qu'ils contiennent de 48 à 55 % en moles de fluorure ou de mélange de fluorures $MX(X_1)_2$, le reste étant constitué par un fluorure ou un mélange de fluorures $M_{II}F_2$.

19. Verres fluorés selon l'une quelconque des revendications 5 à 7, caractérisés par le fait qu'ils contiennent de 25 à 50 % en moles de fluorure ou de mélange de fluorures $MX(X_1)_2$, et de 20 à 60 % en moles de fluorure ou de mélange de fluorures $M_{II}F_2$, le reste étant constitué par un fluorure ou un mélange de fluorures $MtF_2$ à raison de moins de 40 % en moles.

20. Verres fluorés selon l'une quelconque des revendications 8 et 9, caractérisés par le fait qu'ils contiennent de 37 à 50 % en moles de fluorure ou de mélange de fluorures $MX(X_1)_2$, de 10 à 55 % en moles de fluorure ou de mélange de fluorures $M_{II}F_2$, le reste étant constitué par un fluorure ou un mélange de fluorures $M_IF$ présent à raison de moins de 50 % en moles.

21. Verres fluorés selon l'une quelconque des revendications 8 et 9, caractérisés par le fait qu'ils contiennent de 25 à 50 % en moles de fluorure ou de mélange de fluorures $MX(X_1)_2$, de 10 à 60 % de fluorure ou de mélange de fluorures $M_{II}F_2$, jusqu'à 50 % en moles de fluorure ou de mélange de fluorures $M_IF$, le reste étant constitué par un fluorure ou un mélange de fluorures $MtF_2$ présent à raison de moins de 40 % en moles au maximum.

22. Verres fluorés selon l'une quelconque des revendications précédentes, caractérisés par le fait que M représente un métal choisi parmi le fer, le chrome, le vanadium, les terres rares et le titane.

23. Verres fluorés selon l'une quelconque des revendications 5 à 7, 10 à 16, 19 et 21, caractérisés par le fait que M = Fe, Mt = Cu et $M_{II}$ = Pb.

24. Verres fluorés selon l'une quelconque des revendications 5 à 7, 10 à 16, 19 et 21, caractérisés par le fait que M = Cr, Mt = Mn et $M_{II}$ = Pb.

25. Procédé de préparation de verres fluorés tels que définis dans l'une quelconque des revendications précédentes, caractérisé par le fait que l'on mélange les constituants, fait fondre le mélange sous atmosphère neutre et sèche, puis traite le verre liquide obtenu selon les méthodes usuelles pour lui donner la forme désirée.

26. Mélanges de fluorures obtenus intermédiairement dans le procédé de la revendication 25.

**Revendications** (pour les Etats contractants : AT, BE, CH, LU, SE)

1. Verres fluorés, caractérisés par le fait qu'ils contiennent au moins 25 % en moles d'un fluorure ou d'un mélange de fluorures de formule $MX(X_1)_2$ dans laquelle :

X et $X_1$ représentent chacun un atome de fluor, et

M représente alors un métal choisi dans le groupe constitué par : le gallium, le fer, le chrome, le vanadium, l'indium et les terres rares,

ou

X représente un atome d'oxygène,

$X_1$ représente un atome de fluor, et

M représente alors un atome de titane,

étant entendu :

— que lesdits verres ne contiennent pas plus de 10 % en moles de $ZrF_4$ et/ou de $HfF_4$,

— qu'ils sont exempts d'acide fluorhydrique comme élément formateur,

— et qu'ils sont exempts de fluorophosphates.

2. Verres fluorés caractérisés par le fait qu'ils contiennent au moins 25 % en moles d'un fluorure ou d'un mélange de fluorures de formule $MX(X_1)_2$ dans laquelle :

X et $X_1$ représentent chacun un atome de fluor, et

M représente alors un métal choisi dans le groupe constitué par : le gallium, le fer, le chrome, le vanadium, l'indium et les terres rares, à l'exception du terbium,

ou

X représente un atome d'oxygène,

$X_1$ représente un atome de fluor, et

M représente alors un atome de titane,

étant entendu :

— que lesdits verres ne contiennent pas plus de 10 % en moles de $ZrF_4$ et/ou de $HfF_4$,

— qu'ils sont exempts d'acide fluorhydrique comme élément formateur,

— et qu'ils ne contiennent pas de fluorophosphates alcalino-terreux ou n'en contiennent pas plus de 5 % en moles.

3. Verres fluorés selon la revendication 1 ou 2, caractérisé par le fait qu'ils comprennent au moins un fluorure d'une terre rare choisie parmi le néodyme, le gadolinium, l'europium, l'holmium, le praséodyme, et l'erbium.

4. Verres fluorés selon l'une quelconque des revendications précédentes, caractérisés par le fait qu'ils contiennent en outre, dans une proportion pouvant aller jusqu'à 75 % en moles, au moins un fluorure de formule $M_{II}F_2$, $M_{II}$ étant un métal divalent choisi dans le groupe constitué par le plomb, le baryum, le calcium, le cadmium et le strontium.

5. Verres fluorés selon l'une quelconque des revendications précédentes, caractérisés par le fait qu'ils contiennent en outre au moins un fluorure de formule $MtF_2$, Mt étant un métal de transition 3d.

6. Verres fluorés selon la revendication 5, caractérisés par le fait que Mt est choisi dans le groupe constitué par le cobalt, le cuivre, le manganèse, le fer, le nickel, le chrome et le zinc.

7. Verres fluorés selon l'une quelconque des revendications 5 et 6, caractérisés par le fait qu'ils contiennent jusqu'à 40 % en moles de fluorure ou de mélange de fluorures $MtF_2$.

8. Verres fluorés selon l'une quelconque des revendications 4 à 7, caractérisés par le fait qu'ils contiennent en outre au moins un fluorure de formule $M_IF$, $M_I$ étant choisi dans le groupe constitué par les métaux alcalins et l'argent.

9. Verres fluorés selon la revendication 8, caractérisés par le fait qu'ils contiennent jusqu'à 50 % en moles de fluorure ou de mélange de fluorures $M_IF$.

10. Verres fluorés selon l'une quelconque des revendications précédentes, caractérisés par le fait qu'ils contiennent en outre un ou plusieurs halogénures autres que des fluorures.

11. Verres fluorés selon la revendication 10, caractérisés par le fait que lesdits halogénures sont des halogénures des métaux $M_{II}$ et $M_I$, $M_{II}$ et $M_I$ étant définis comme précédemment.

12. Verres fluorés selon l'une quelconque des revendications 10 et 11, caractérisés par le fait qu'ils contiennent jusqu'à 10 % en moles dudit halogénure autre que les fluorures.

13. Verres fluorés selon l'une quelconque des revendications 10 à 12, caractérisés par le fait que ledit halogénure est $PbCl_2$.

14. Verres fluorés selon l'une quelconque des revendications précédentes, caractérisés par le fait qu'ils ne contiennent pas plus de 10 % en moles de trifluorure d'aluminium.

15. Verres fluorés selon l'une quelconque des revendications précédentes, caractérisés par le fait qu'ils sont exempts de trifluorure d'aluminium.

16. Verres fluorés selon l'une quelconque des revendications précédentes, caractérisés par le fait qu'ils sont exempts de fluorure de béryllium et de fluorure de magnésium.

17. Verres fluorés selon l'une quelconque des revendications 2 à 16, caractérisés par le fait qu'ils sont exempts de fluorophosphate.

18. Verres fluorés selon l'une quelconque des revendications 4 et 15 à 17, caractérisés par le fait qu'ils contiennent de 25 à 30 % en moles de fluorure ou de mélange de fluorures $MX(X_1)_2$, le reste étant constitué par un fluorure ou un mélange de fluorures $M_{II}F_2$.

19. Verres fluorés selon l'une quelconque des revendications 4 et 15 à 17, caractérisés par le fait qu'ils contiennent de 48 à 55 % en moles de fluorure ou de mélange de fluorures $MX(X_1)_2$, le reste étant constitué par un fluorure ou un mélange de fluorures $M_{II}F_2$.

20. Verres fluorés selon l'une quelconque des revendications 5 à 7, caractérisés par le fait qu'ils contiennent de 25 à 50 % en moles de fluorure ou de mélange de fluorures $MX(X_1)_2$, et de 20 à 60 % en moles de fluorure ou de mélange de fluorures $M_{II}F_2$, le reste étant constitué par un fluorure ou un mélange de fluorures $MtF_2$ présent à raison de moins de 40 % en moles.

21. Verres fluorés selon l'une quelconque des revendications 8 et 9, caractérisés par le fait qu'ils contiennent de 37 à 50 % en moles de fluorure ou de mélange de fluorures $MX(X_1)_2$, de 10 à 55 % en moles de fluorure ou de mélange de fluorures $M_{II}F_2$, le reste étant constitué par un fluorure ou un mélange de fluorures $M_IF$ présent à raison de moins de 50 % en moles.

22. Verres fluorés selon l'une quelconque des revendications 8 et 9, caractérisés par le fait qu'ils contiennent de 25 à 50 % en moles de fluorure ou de mélange de fluorures $MX(X_1)_2$, de 10 à 60 % de fluorure ou de mélange de fluorures $M_{II}F_2$, jusqu'à 50 % en moles de fluorure ou de mélange de fluorures $M_IF$, le reste étant constitué par un fluorure ou un mélange de fluorures $MtF_2$ présent à raison de moins de 40 % en moles au maximum.

23. Verres fluorés selon l'une quelconque des revendications précédentes, caractérisés par le fait que M représente un métal choisi parmi le fer, le chrome, le vanadium, les terres rares et le titane.

24. Verres fluorés selon l'une quelconque des revendications 5 à 7, 10 à 17, 20 et 22, caractérisés par le fait que M = Fe, Mt = Cu et $M_{II}$ = Pb.

25. Verres fluorés selon l'une quelconque des revendications 5 à 7, 10 à 17, 20 et 22, caractérisés par le fait que M = Cr, Mt = Mn et $M_{II}$ = Pb.

26. Procédé de préparation de verres fluorés tels que définis dans l'une quelconque des revendications précédentes, caractérisé par le fait que l'on mélange les constituants, fait fondre le mélange sous atmosphère neutre et sèche, puis traite le verre liquide obtenu selon les méthodes usuelles pour lui donner la forme désirée.

27. Mélanges de fluorures obtenus intermédiairement dans le procédé de la revendication 26.

**Claims** (for the Contracting States : DE, GB, IT, NL)

1. Fluorine glasses, characterised in that they contain at least 25 mole % of a fluoride or a mixture of fluorides of formula $MX(X_1)_2$, in which

X and $X_1$ each denote a fluorine atom, and

M then denotes a metal chosen from the group consisting of : gallium, iron, chromium, vanadium, indium and the rare earths,

or

X denotes an oxygen atom,

$X_1$ denotes a fluorine atom, and

M then denotes a titanium atom,

it being understood :

— that the said glasses do not contain more than 10 mole % of $ZrF_4$ and/or $HfF_4$,

— that they are free from hydrofluoric acid as network former component,

— that they do not contain more than 10 mole % of aluminium trifluoride,

— and that they are free from fluorophosphates ; except for the glass containing 25 % of NaF, 5 % of $MgF_2$, 20 % of $BaF_2$, 20 % of $YF_3$, 20 % of $TbF_3$ and 10 % of $GaF_3$.

2. Fluorine glasses, characterised in that they contain at least 25 mole % of a fluoride or a mixture of fluorides of formula $MX(X_1)_2$ in which

X and $X_1$ each denote a fluorine atom, and

M then denotes a metal chosen from the group consisting of : gallium, iron, chromium, vanadium, indium and the rare earths, with the exception of terbium,

or

X denotes an oxygen atom, and $X_1$ a fluorine atom, and

M then denotes a titanium atom,

it being understood :

— that the said glasses do not contain more than 10 mole % of $ZrF_4$ and/or of $HfF_4$,

— that they are free from hydrofluoric acid as network former component,

— that they do not contain more than 10 mole % of aluminium trifluoride,

— and that they do not contain alkaline-earth fluorophosphates, or do not contain more than 5 mole % of these.

3. Fluorine glasses according to claim 1 or 2, characterised in that they comprise at least one fluoride of a rare earth chosen from neodymium, gadolinium, europium, holmium, praseodymium and erbium.

4. Fluorine glasses according to any one of the preceding claims, characterised in that they additionally contain, in a proportion which can go up to 75 mole %, at least one fluoride of formula $M_{II}F_2$, $M_{II}$ being a divalent metal chosen from the group consisting of lead, barium, calcium, cadmium and strontium.

5. Fluorine glasses according to any one of the preceding claims, characterised in that they additionally contain at least one fluoride of formula $MtF_2$, Mt being a 3d transition metal.

6. Fluorine glasses according to claim 5, characterised in that Mt is chosen from the group consisting of cobalt, copper, manganese, iron, nickel, chromium and zinc.

7. Fluorine glasses according to either of claims 5 and 6, characterised in that they contain up to 40 mole % of fluoride or mixture of fluorides $MtF_2$.

8. Fluorine glasses according to any one of claims 4 to 7, characterised in that they additionally contain at least one fluoride of formula $M_IF$, $M_I$ being chosen from the group consisting of the alkali metals and silver.

9. Fluorine glasses according to claim 8, characterised in that they contain up to 50 mole % of fluoride or mixture of fluorides $M_IF$.

10. Fluorine glasses according to any one of the preceding claims, characterised in that they additionally contain one or more halides other than fluorides.

11. Fluorine glasses according to claim 10, characterised in that the said halides are halides of metals $M_{II}$ and $M_I$, $M_{II}$ and $M_I$ being defined as previously.

12. Fluorine glasses according to either of claims 10 and 11, characterised in that they contain up to 10 mole % of the said halide other than fluorides.

13. Fluorine glasses according to any one of claims 10 to 12, characterised in that the said halide is $PbCl_2$.

14. Fluorine glasses according to any one of the preceding claims, characterised in that they are free from aluminium trifluoride.

15. Fluorine glasses according to any one of the preceding claims, characterised in that they are free from beryllium fluoride and magnesium fluoride.

16. Fluorine glasses according to any one of claims 2 to 15, characterised in that they are free from fluorophosphate.

17. Fluorine glasses according to any one of claims 4 and 14 to 16, characterised in that they contain from 25 to 30 mole % of fluoride or mixture of fluorides $MX(X_1)_2$, the remainder consisting of a fluoride or a mixture of fluorides $M_{II}F_2$.

18. Fluorine glasses according to any one of claims 4 and 14 to 16, characterised in that they contain from 48 to 55 mole % of fluoride or mixture of fluorides $MX(X_1)_2$, the remainder consisting of a fluoride or a mixture of fluorides $M_{II}F_2$.

19. Fluorine glasses according to any one of claims 5 to 7, characterised in that they contain from 25 to 50 mole % of fluoride or mixture of fluorides $MX(X_1)_2$, and from 20 to 60 mole % of fluoride or mixture of fluorides $M_{II}F_2$, the remainder consisting of a fluoride or a mixture of fluorides $MtF_2$ in a proportion of less than 40 mole %.

20. Fluorine glasses according to either of claims 8 and 9, characterised in that they contain from 37 to 50 mole % of fluoride or mixture of fluorides $MX(X_1)_2$, from 10 to 55 mole % of fluoride or mixture of fluorides $M_{II}F_2$, the remainder consisting of a fluoride or a mixture of fluorides $M_IF$ present in a proportion of less than 50 mole %.

21. Fluorine glasses according to either of claims 8 and 9, characterised in that they contain from 25 to 50 mole % of fluoride or mixture of fluorides $MX(X_1)_2$, from 10 to 60 % of fluoride or mixture of fluorides $M_{II}F_2$, up to 50 mole % of fluoride mixture of fluorides $M_IF$, the remainder consisting of a fluoride or a mixture of fluorides $MtF_2$ present in a proportion of less than 40 mole % at most.

22. Fluorine glasses according to any one of the preceding claims, characterised in that M denotes a metal chosen from iron, chromium, vanadium, the rare earths and titanium.

23. Fluorine glasses according to any one of claims 5 to 7, 10 to 16, 19 and 21, characterised in that $M = Fe$, $Mt = Cu$ and $M_{II} = Pb$.

24. Fluorine glasses according to any one of claims 5 to 7, 10 to 16, 19 and 21, characterised in that $M = Cr$, $Mt = Mn$ and $M_{II} = Pb$.

25. Process for the preparation of fluorine glasses as defined in any one of the preceding claims, which process is characterised in that the components are mixed, the mixture is melted under neutral and dry atmosphere, and then the liquid glass obtained is treated in accordance with the usual methods to be given the required shape.

26. Mixtures of fluorides obtained intermediately in the process of claim 25.


**Claims** (for the Contracting States : AT, BE, CH, LU, SE)

1. Fluorine glasses, characterised in that they contain at least 25 mole % of a fluoride or a mixture of fluorides of formula $MX(X_1)_2$, in which

X and $X_1$ each denote a fluorine atom, and

M then denotes a metal chosen from the group consisting of : gallium, iron, chromium, vanadium, indium and the rare earths,

or

X denotes an oxygen atom,

$X_1$ denotes a fluorine atom, and

M then denotes a titanium atom,

it being understood :

— that the said glasses do not contain more than 10 mole % of $ZrF_4$ and/or $HfF_4$,

— that they are free from hydrofluoric acid as network former component,

— and that they are free from fluorophosphates.

2. Fluorine glasses, characterised in that they contain at least 5 mole % of a fluoride or a mixture of fluorides of formula $MX(X_1)_2$ in which

X and $X_1$ each denote a fluorine atom, and

M then denotes a metal chosen from the group consisting of : gallium, iron, chromium, vanadium, indium and the rare earths, with the exception of terbium,

or

X denotes an oxygen atom, $X_1$ denotes a fluorine atom, and

M denotes a titanium atom,

it being understood :

— that the said glasses do not contain more than 10 mole % of $ZrF_4$ and/or of $HfF_4$,

— that they are free from hydrofluoric acid as network former component,

— and that they do not contain alkaline-earth fluorophosphates, or do not contain more than 5 mole % of these.

3. Fluorine glasses according to claim 1 to 2, characterised in that they comprise at least one fluoride of a rare earth chosen from neodymium, gadolinium, europium, holmium, praseodymium and erbium.

4. Fluorine glasses according to any one of the preceding claims, characterised in that they additionally contain, in a proportion which can go up to 75 mole %, at least one fluoride of formula $M_{II}F_2$, $M_{II}$ being a divalent metal chosen from the group consisting of lead ; barium, calcium, cadmium and strontium.

5. Fluorine glasses according to any one of the preceding claims, characterised in that they additionally contain at least one fluoride of formula $MtF_2$, Mt being a 3d transition metal.

6. Fluorine glasses according to claim 5, characterised in that Mt is chosen from the group consisting of cobalt, copper, manganese, iron, nickel, chromium and zinc.

7. Fluorine glasses according to either of claims 5 and 6, characterised in that they contain up to 40 mole % of fluoride or mixture of fluorides $MtF_2$.

8. Fluorine glasses according to any one of claims 4 to 7, characterised in that they additionally contain at least one fluoride of formula $M_lF$, $M_l$ being chosen from the group consisting of the alkali metals and silver.

9. Fluorine glasses according to claim 8, characterised in that they contain up to 50 mole % of fluoride or mixture of fluorides $M_lF$.

10. Fluorine glasses according to any one of the preceding claims, characterised in that they additionally contain one or more halides other than fluorides.

11. Fluorine glasses according to claim 10, characterised in that the said halides are halides of metals $M_{ll}$ and $M_l$, $M_{ll}$ and $M_l$ being defined as previously.

12. Fluorine glasses according to either of claims 10 and 11, characterised in that they contain up to 10 mole % of the said halide other than fluorides.

13. Fluorine glasses according to any one of claims 10 to 12, characterised in that the said halide is $PbCl_2$.

14. Fluorine glasses according to any one of the preceding claims, characterised in that they do not contain more than 10 mole % of aluminium trifluoride.

15. Fluorine glasses according to any one of the preceding claims characterised in that they are free from aluminium trifluoride.

16. Fluorine glasses according to any one of the preceding claims, characterised in that they are free from beryllium fluoride and magnesium fluoride.

17. Fluorine glasses according to any one of claims 2 to 16, characterised in that they are free from fluorophosphate.

18. Fluorine glasses according to any one of claims 4 and 15 to 17, characterised in that they contain from 25 to 30 mole % of fluoride or mixture of fluorides $MX(X_1)_2$, the remainder consisting of a fluoride or a mixture of fluorides $M_{ll}F_2$.

19. Fluorine glasses according to any one of claims 4 and 15 to 17, characterised in that they contain from 48 to 55 mole % of fluoride or mixture of fluorides $MX(X_1)_2$, the remainder consisting of a fluoride or a mixture of fluorides $M_{ll}F_2$.

20. Fluorine glasses according to any one of claims 5 to 7, characterised in that they contain from 25 to 50 mole % of fluoride or mixture of fluorides $MX(X_1)_2$, and from 20 to 60 mole % of fluoride or mixture of fluorides $M_{ll}F_2$, the remainder consisting of a fluoride or a mixture of fluorides $MtF_2$ in a proportion of less than 40 mole %.

21. Fluorine glasses according to either of claims 8 and 9, characterised in that they contain from 37 to 50 mole % of fluoride or mixture of fluorides $MX(X_1)_2$, from 10 to 55 mole % of fluoride or mixture of fluorides $M_{ll}F_2$, the remainder consisting of a fluoride or a mixture of fluorides $MtF_2$ in a proportion of less of less than 50 mole %.

22. Fluorine glasses according to either of claims 8 and 9, characterised in that they contain from 25 to 50 mole % of fluoride or mixture of fluorides $MX(X_1)_2$, from 10 to 60 % of fluoride or mixture of fluorides $M_{ll}F_2$, up to 50 mole % of fluoride or mixture of fluorides $M_lF$, the remainder consisting of a fluoride or a mixture of fluorides $MtF_2$ present in a proportion of less than 40 mole % at most.

23. Fluorine glasses according to anyone of the preceding claims, characterised in that M denotes a metal chosen from iron, chromium, vanadium, the rare earths and titanium.

24. Fluorine glasses according to any one of claims 5 to 7, 10 to 17, 20 and 22, characterised in that $M = Fe$, $Mt = Cu$ and $M_{ll} = Pb$.

25. Fluorine glasses according to any one of claims 5 to 7, 10 to 17, 20 and 22, characterised in that $M = Cr$, $Mt = Mn$ and $M_{ll} = Pb$.

26. Process for the preparation of fluorine glasses as defined in any one of the preceding claims, which process is characterised in that the components are mixed, the mixture is melted under neutral and dry atmosphere, and then the liquid glass obtained is treated in accordance with the usual methods to be given the required shape.

27. Mixtures of fluorides obtained intermediately in the process of claim 26.


**Patentansprüche** (für die Vertragsstaaten : DE, GB, IT, NL)


1. Fluorierte Gläser, dadurch gekennzeichnet, daß sie mindestens 25 Mol-% eines Fluorids oder einer Mischung von Fluoriden der Formel $MX(X_1)_2$ enthalten, worin

X und $X_1$ jeweils ein Fluoratom bedeuten, und

M dann ein Metall bedeutet, das ausgewählt ist aus der Gruppe bestehend aus : Gallium, Eisen, Chrom, Vanadium, Indium und Seltenen Erden,

oder

X ein Sauerstoffatom bedeutet,

$X_1$ ein Fluoratom bedeutet, und

M dann ein Titanatom bedeutet,

mit der Maßgabe,

— daß die Gläser nicht mehr als 10 Mol-% $ZrF_4$ und/oder $HfF_4$ enthalten,

— daß sie keine Fluorwasserstoffsäure als Netzwerkbildner enthalten,

0 0 17 566

— daß sie nicht mehr als 10 Mol-% Aluminiumtrifluorid enthalten, und
— daß sie keine Fluorphosphate enthalten ;
mit der Ausnahme von Glas, das 25 % NaF, 5 % $MgF_2$, 20 % $BaF_2$, 20 % $YF_3$, 20 %$TbF_3$ und 10 %$GaF_3$.

2. Fluorierte Gläser, dadurch gekennzeichnet, daß sie mindestens 25 Mol-% eines Fluorids oder einer Mischung von Fluoriden der Formel $MX(X_1)_2$ enthalten, worin

X und $X_1$ jeweils ein Fluoratom bedeuten, und

M dann ein Metall bedeutet, das ausgewählt ist aus der Gruppe bestehend aus : Gallium, Eisen, Chrom Vanadium, Indium und Seltenen Erden, mit der Ausnahme von Terbium,

oder

X ein Sauerstoffatom bedeutet,

$X_1$ ein Fluoratom bedeutet, und

M dann ein Titanatom bedeutet,

mit der Maßgabe,

— daß die Gläser nicht mehr als 10 Mol-% $ZrF_4$ und/oder $HfF_4$ enthalten,

— daß sie keine Fluorwasserstoffsäure als Netzwerkbildner enthalten,

— daß sie nicht mehr als 10 Mol-% Aluminiumtrifluorid enthalten, und

— daß sie keine oder nicht mehr als 5 Mol-% Erdalkalifluorphosphate enthalten.

3. Fluorierte Gläser nach Anspruch 1 oder 2, dadurch gekennzeichnet, daß sie mindestens ein Fluorid einer Seltenen Erde ausgewählt unter Neodym, Gadolinium, Europium, Holmium, Praseodym und Erbium aufweisen.

4. Fluorierte Gläser nach einem der vorhergehenden Ansprüche, dadurch gekennzeichnet, daß sie außerdem in einem Anteil bis zu 75 Mol-% mindestens ein Fluorid der Formel $M_{II}F_2$ enthalten, wobei $M_{II}$ ein divalentes Metall darstellt, das ausgewählt ist aus der Gruppe bestehend aus Blei, Barium, Calcium, Cadmium und Strontium.

5. Fluorierte Gläser nach einem der vorhergehenden Ansprüche, dadurch gekennzeichnet, daß sie außerdem mindestens ein Fluorid der Formel $MtF_2$ enthalten, wobei Mt ein 3d-Übergangsmetall darstellt.

6. Fluorierte Gläser nach Anspruch 5, dadurch gekennzeichnet, daß Mt ausgewählt ist aus der Gruppe bestehend aus Kobalt, Kupfer, Mangan, Eisen, Nickel, Chrom und Zink.

7. Fluorierte Gläser nach einem der Ansprüche 5 und 6, dadurch gekennzeichnet, daß sie bis zu 40 Mol-% eines Fluorids oder einer Mischung von Fluoriden $MtF_2$ enthalten.

8. Fluorierte Gläser nach einem der Ansprüche 4 bis 7, dadurch gekennzeichnet, daß sie außerdem mindestens ein Fluorid der Formel $M_IF$ enthalten, wobei $M_I$ ausgewählt ist aus der Gruppe bestehend aus Alkalimetallen und Silber.

9. Fluorierte Gläser nach Anspruch 8, dadurch gekennzeichnet, daß sie bis zu 50 Mol-% eines Fluorids oder einer Mischung von Fluoriden $M_IF$ enthalten.

10. Fluorierte Gläser nach einem der vorhergehenden Ansprüche, dadurch gekennzeichnet, daß sie außerdem ein oder mehrere Halogenid(e) enthalten, die keine Fluoride sind.

11. Fluorierte Gläser nach Anspruch 10, dadurch gekennzeichnet, daß es sich bei den Halogeniden um Halogenider der Metalle $M_{II}$ und $M_I$ handelt, wobei $M_{II}$ und $M_I$ die zuvor angegebenen Bedeutungen besitzen.

12. Fluorierte Gläser nach einem der Ansprüche 10 und 11, dadurch gekennzeichnet, daß sie bis zu 10 Mol-% dieser Halogenide enthalten, die keine Fluoride sind.

13. Fluorierte Gläser nach einem der Ansprüche 10 bis 12, dadurch gekennzeichnet, daß das Halogenid $PbCl_2$ ist.

14. Fluorierte Gläser nach einem der vorhergehenden Ansprüche, dadurch gekennzeichnet, daß sie kein Aluminiumtrifluorid enthalten.

15. Fluorierte Gläser nach einem der vorhergehenden Ansprüche, dadurch gekennzeichnet, daß sie kein Berylliumfluorid und Magnesiumfluorid enthalten.

16. Fluorierte Gläser nach einem der Ansprüche 2 bis 15, dadurch gekennzeichnet, daß sie keine Fluorphosphate enthalten.

17. Fluorierte Gläser nach einem der Ansprüche 4 und 14 bis 16, dadurch gekennzeichnet, daß sie 25-30 Mol-% eines Fluorids oder einer Mischung von Fluoriden $MX(X_1)_2$ enthalten, wobei der Rest aus einem Fluorid oder einer Mischung von Fluoriden $M_{II}F_2$ besteht.

18. Fluorierte Gläser nach einem der Ansprüche 4 und 14 bis 16, dadurch gekennzeichnet, daß sie 48-55 Mol-% eines Fluorids oder einer Mischung von Fluoriden $MX(X_1)_2$ enthalten, wobei der Rest aus einem Fluorid oder einer Mischung von Fluoriden $M_{II}F_2$ besteht.

19. Fluorierte Gläser nach einem der Ansprüche 5 bis 7, dadurch gekennzeichnet, daß sie 25-50 Mol-% eines Fluorids oder einer Mischung von Fluorids oder einer Mischung von Fluoriden $MX(X_1)_2$ und 20-60 Mol-% eines Fluorids oder einer Mischung von Fluoriden $M_{II}F_2$ enthalten, wobei der Rest aus einem Fluorid oder einer Mischung von Fluoriden $MtF_2$ besteht, der weniger als 40 Mol-% ausmacht.

20. Fluorierte Gläser nach einem der Ansprüche 8 und 9, dadurch gekennzeichnet, daß sie 37-50 Mol-% eines Fluorids oder einer Mischung von Fluoriden $MX(X_1)_2$ und 10-55 Mol-% eines Fluorids oder einer Mischung von Fluoriden $M_{II}F_2$ enthalten, wobei der Rest aus einem Fluorid oder einer Mischung von Fluoriden $M_IF$ besteht, der weniger als 50 Mol-% ausmacht.

21. Fluorierte Gläser nach einem der Ansprüche 8 und 9, dadurch gekennzeichnet, daß sie 25-50

17

Mol-% eines Fluorids oder einer Mischung von Fluoriden $MX(X_1)_2$, 10-60 % eines Mischung von Fluoriden $M_{II}F_2$ und bis zu 50 Mol-% eines Fluorids oder einer Mischung von Fluoriden $M_IF$ enthalten, wobei der Rest aus einem Fluorid oder einer Mischung von Fluoriden $MtF_2$ besteht, der höchstens bis zu 40 Mol-% ausmacht.

22. Fluorierte Gläser nach einem der vorhergehenden Ansprüche, dadurch gekennzeichnet, daß M ein Metall bedeutet, das ausgewählt ist unter Eisen, Chrom, Vanadium, Seltenen Erden und Titan.

23. Fluorierte Gläser nach einem der Ansprüche 5 bis 7, 10-16, 19 und 21, dadurch gekennzeichnet, daß M = Fe, Mt = Cu und $M_{II}$ = Pb ist.

24. Fluorierte Gläser nach einem der Ansprüche 5 bis 7, 10-16, 19 und 21, dadurch gekennzeichnet, daß M = Cr, Mt = Mn und $M_{II}$ Pb ist.

25. Verfahren zur Herstellung der in einem der vorhergehenden Ansprüche beschriebenen fluorierten Gläser, dadurch gekennzeichnet, daß man die Bestandteile mischt, die Mischung unter neutraler und trockener Atmosphäre schmelzen läßt und dann das erhaltene flüssige Glas gemäß bekannten Methoden behandelt, um ihm die gewünschte Form zu geben.

26. Mischungen von Fluoriden, intermediär im Verfahren gemäß Anspruch 25 erhalten.

**Patentansprüche** (für die Vertragsstaaten : AT, BE, CH, LU, SE)

1. Fluorierte Gläser, dadurch gekennzeichnet, daß sie mindestens 25 Mol-% eines Fluorids oder einer Mischung von Fluoriden der Formel $MX(X_1)_2$ enthalten, worin

X und $X_1$ jeweils ein Fluoratom bedeuten, und

M dann ein Metall bedeutet, das ausgewählt ist aus der Gruppe bestehend aus : Gallium, Eisen, Chrom, Vanadium, Indium und Seltenen Erden,

oder

X ein Sauerstoffatom bedeutet,

$X_1$ ein Fluoratom bedeutet, und

M dann ein Titanatom bedeutet,

mit der Maßgabe,

— daß die Gläser nicht mehr als 10 Mol-% $ZrF_4$ und/oder $HfF_4$ enthalten,

— daß sie keine Fluorwasserstoffsäure als Netzwerkbildner enthalten, und

— daß sie keine Fluorphosphate enthalten.

2. Fluorierte Gläser, dadurch gekennzeichnet, daß sie mindestens 25 Mol-% eines Fluorids oder einer Mischung von Fluoriden der Formel $MX(X_1)_2$ enthalten, worin

X und $X_1$ jeweils ein Fluoratom bedeuten, und

M dann ein Metall bedeutet, das ausgewählt ist aus der Gruppe bestehend aus : Gallium, Eisen, Chrom Vanadium, Indium und Seltenen Erden, mit der Ausnahme von Terbium,

oder

X ein Sauerstoffatom bedeutet,

$X_1$ ein Fluoratom bedeutet, und

M dann ein Titanatom bedeutet,

mit der Maßgabe,

— daß die Gläser nicht mehr als 10 Mol-% $ZrF_4$ und/oder $HfF_4$ enthalten,

— daß sie keine Fluorwasserstoffsäure als Netzwerkbildner enthalten, und

— daß sie keine oder nicht mehr als 5 Mol-% Erdalkalifluorphosphate enthalten.

3. Fluorierte Gläser nach Anspruch 1 oder 2, dadurch gekennzeichnet, daß sie mindestens ein Fluorid einer Seltenen Erde ausgewählt unter Neodym, Gadolinium, Europium, Holmium, Praseodym und Erbium aufweisen.

4. Fluorierte Gläser nach einem der vorhergehenden Ansprüche, dadurch gekennzeichnet, daß sie außerdem in einem Anteil bis zu 75 Mol-% mindestens ein Fluorid der Formel $M_{II}F_2$ enthalten, wobei $M_{II}$ ein divalentes Metall darstellt, das ausgewählt ist aus der Gruppe bestehend aus Blei, Barium, Calcium, Cadmium und Strontium.

5. Fluorierte Gläser nach einem der vorhergehenden Ansprüche, dadurch gekennzeichnet, daß sie außerdem mindestens ein Fluorid der Formel $MtF_2$ enthalten, wobei Mt ein 3d-Übergangsmetall darstellt.

6. Fluorierte Gläser nach Anspruch 5, dadurch gekennzeichnet, daß Mt ausgewählt ist aus der Gruppe bestehend aus Kobalt, Kupfer, Mangan, Eisen, Nickel, Chrom und Zink.

7. Fluorierte Gläser nach einem der Ansprüche 5 und 6, dadurch gekennzeichnet, daß sie bis zu 40 Mol-% eines Fluorids oder einer Mischung von Fluoriden $MtF_2$ enthalten.

8. Fluorierte Gläser nach einem der Ansprüche 4 bis 7, dadurch gekennzeichnet, daß sie außerdem mindestens ein Fluorid der Formel $M_IF$ enthalten, wobei $M_I$ ausgewählt ist aus der Gruppe bestehend aus Alkalimetallen und Silber.

9. Fluorierte Gläser nach Anspruch 8, dadurch gekennzeichnet, daß sie bis zu 50 Mol-% eines Fluorids oder einer Mischung von Fluoriden $M_IF$ enthalten.

10. Fluorierte Gläser nach einem der vorhergehenden Ansprüche, dadurch gekennzeichnet, daß sie außerdem ein oder mehrere Halogenid(e) enthalten, die keine Fluoride sind.

11. Fluorierte Gläser nach Anspruch 10, dadurch gekennzeichnet, daß es sich bei den Halogeniden

**0 017 566**

um Halogenide der Metalle $M_{II}$ und $M_I$ handelt, wobei $M_{II}$ und $M_I$ die zuvor angegebenen Bedeutungen besitzen.

12. Fluorierte Gläser nach einem der Ansprüche 10 und 11, dadurch gekennzeichnet, daß sie bis zu 10 Mol-% dieser Halogenide enthalten, die keine Fluoride sind.

13. Fluorierte Gläser nach einem der Ansprüche 10 bis 12, dadurch gekennzeichnet, daß das Halogenid $PbCl_2$ ist.

14. Fluorierte Gläser nach einem der vorhergehenden Ansprüche, dadurch gekennzeichnet, daß sie nicht mehr als 10 Mol-% Aluminiumtrifluorid enthalten.

15. Fluorierte Gläser nach einem der vorhergehenden Ansprüche, dadurch gekennzeichnet, daß sie kein Aluminiumtrifluorid enthalten.

16. Fluorierte Gläser nach einem der vorhergehenden Ansprüche, dadurch gekennzeichnet, daß sie kein Berylliumfluorid und Magnesiumfluorid enthalten.

17. Fluorierte Gläser nach einem der Ansprüche 2 bis 16, dadurch gekennzeichnet, daß sie keine Fluorphosphate enthalten.

18. Fluorierte Gläser nach einem der Ansprüche 4 und 15 bis 17, dadurch gekennzeichnet, daß sie 25-30 Mol-% eines Fluorids oder einer Mischung von Fluoriden $MX(X_1)_2$ enthalten, wobei der Rest aus einem Fluorid oder einer Mischung von Fluoriden $M_{II}F_2$ besteht.

19. Fluorierte Gläser nach einem der Ansprüche 4 und 15 bis 17, dadurch gekennzeichnet, daß sie 48-55 Mol-% eines Fluorids oder einer Mischung von Fluoriden $MX(X_1)_2$ enthalten, wobei der Rest aus einem Fluorid oder einer Mischung von Fluoriden $M_{II}F_2$ besteht.

20. Fluorierte Gläser nach einem der Ansprüche 5 bis 7, dadurch gekennzeichnet, daß sie 25-50 Mol-% eines Fluorids oder einer Mischung von Fluoriden $MX(X_1)_2$ und 20-60 Mol-% eines Fluorids oder einer Mischung von Fluoriden $M_{II}F_2$ enthalten, wobei der Rest aus einem Fluorid oder einer Mischung von Fluoriden $MtF_2$ besteht, der weniger als 40 Mol-% ausmacht.

21. Fluorierte Gläser nach einem der Ansprüche 8 und 9, dadurch gekennzeichnet, daß sie 37-50 Mol-% eines Fluorids oder einer Mischung von Fluoriden $MX(X_1)_2$ und 10-55 Mol-% eines Fluorids oder einer Mischung von Fluoriden $M_{II}F_2$ enthalten, wobei der Rest aus einem Fluorid oder einer Mischung von Fluoriden $M_IF$ besteht, der weniger als 50 Mol-% ausmacht.

22. Fluorierte Gläser nach einem der Ansprüche 8 und 9, dadurch gekennzeichnet, daß sie 25-50 Mol-% eines Fluorids oder einer Mischung von Fluoriden $MX(X_1)_2$, 10-60 % eines Fluorids oder einer Mischung von Fluoriden $M_{II}F_2$ und bis zu 50 Mol-% eines Fluorids oder einer Mischung von Fluoriden $M_IF$ enthalten, wobei der Rest aus einem Fluorid oder einer Mischung von Fluoriden $MtF_2$ besteht, der höchstens bis zu 40 Mol-% ausmacht.

23. Fluorierte Gläser nach einem der vorhergehenden Ansprüche, dadurch gekennzeichnet, daß M ein Metall bedeutet, das ausgewählt ist unter Eisen, Chrom, Vanadium, Seltenen Erden und Titan.

24. Fluorierte Gläser nach einem der Ansprüche 5 bis 7, 10-17, 20 und 22, dadurch gekennzeichnet, daß M = Fe, Mt = Cu und $M_{II}$ = Pb ist.

25. Fluorierte Gläser nach einem der Ansprüche 5 bis 7, 10-17, 20 und 22, dadurch gekennzeichnet, daß M = Cr, Mt = Mn und $M_{II}$ Pb ist.

26. Verfahren zur Herstellung der in einem der vorhergehenden Ansprüche beschriebenen fluorierten Gläser, dadurch gekennzeichnet, daß man die Bestandteile mischt, die Mischung unter neutraler und trockener Atmosphäre schmelzen läßt und dann das erhaltene flüssige Glas gemäß bekannten Methoden behandelt, um ihm die gewünschte Form zu geben.

27. Mischungen von Fluoriden, intermediär im Verfahren gemäß Anspruch 26 erhalten.

19